# EUROPEAN PATENT APPLICATION

(11) **EP 2 996 071 A1**
(43) Date of publication of application: **16.03.2016**
(21) Application number: 14795282.4
(22) Date of filing: 07.05.2014
(51) Int. Cl.: G06Q 10/02, G06Q 50/10, G06Q 50/12

(54) **RESERVATION SYSTEM**

(30) Priority: 07.05.2013 JP 2013097506
(71) Applicant: Azuma, Yoshihiro, Tokyo 153-0043 (JP)
(72) Inventor: Azuma, Yoshihiro, Tokyo 153-0043 (JP)
(74) Representative: Ström & Gulliksson AB
(86) International application number: PCT/JP2014/062283
(87) International publication number: WO 2014/181808

(57) **Abstract**

Provided is a reservation system more convenient than conventional ones. In a reservation system, a store terminal (20) can accept and register a reservation with a combination of four or more elements including a time, a location, a seat, and a person from a user terminal (50). In this case, in addition to the four elements, various elements such as a menu are subject to the combination. Further, in the reservation system, the reservation is visualized. In other words, a seat layout or the like can be customized on the store terminal (20) side, and a user can perform a reservation operation while visually confirming the seat layout by means of the user terminal (50).

## Description

### TECHNICAL FIELD

The present invention relates to a reservation system.

### BACKGROUND ART

Conventionally, network-mediated reservation systems have been known (for example, refer to Japanese Unexamined Patent Application, Publication No. 2013-20626.

Patent Document 1: Japanese Unexamined Patent Application, Publication No. 2013-20626

### DISCLOSURE OF THE INVENTION

### Problems to be Solved by the Invention

However, the conventional reservation systems lack convenience.

The present invention was made in view of such a situation, and it is an object of the present invention to provide a reservation system that is more convenient than the conventional systems.

### Means for Solving the Problems

In order to achieve the abovementioned object, a reservation system according to one aspect of the present invention accepts and registers a reservation with a combination of four or more elements including the time, location, seat, and persons.

### Effects of the Invention

In accordance with the present invention, it is possible to provide a reservation system that is more convenient than the conventional ones.

### BRIEF DESCRIPTION OF THE DRAWINGS

FIG. 1 is an illustration showing the configuration of a reservation system according to one embodiment of the present invention;
FIG. 2 is a block diagram showing the hardware configuration of a server of the reservation system of FIG. 1;
FIG. 3 is a front view illustrating an outline of an outer appearance of an establishment terminal in the reservation system of FIG. 1;
FIG. 4 is a block diagram illustrating the hardware configuration of an establishment terminal in the reservation system of FIG. 1;
FIG. 5 is a functional block diagram illustrating a functional configuration for executing processing relating to a reservation among the functional configurations of FIG. 2;
FIG. 6 is a view illustrating an example of associated relationships among staff members (persons), a facility (a room or a seat), and a product for each establishment (location);
FIG. 7 illustrates an example of a GUI screen for making a layout in a case of a restaurant being selected as an establishment;
FIG. 8 illustrates an example of a GUI screen for making a layout in a case of a restaurant being selected as an establishment;
FIG. 9 is a view illustrating a usage example of the reservation system of FIG. 1 for reservation registration by a user terminal in a case of being applied to prepared food business;
FIG. 10 is a view illustrating part of the details of the usage example of FIG. 9, which is a usage example of the reservation system of FIG. 1 for reservation registration by a user terminal in a case of being applied to prepared food business;
FIG. 11 illustrates an example of a reservation status managed by the reservation management unit of FIG. 5; and
FIG. 12 illustrates an example of a reservation status managed by the reservation management unit of FIG. 5.

### PREFERRED MODE FOR CARRYING OUT THE INVENTION

Hereinafter, embodiments of the present invention will be explained with reference to the drawings.

### Summary of Reservation System

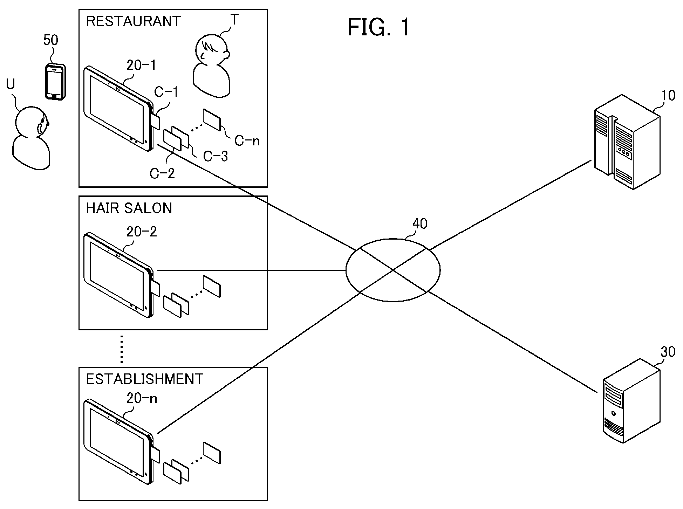

FIG. 1 illustrates the configuration of a reservation system according to one embodiment of the present invention.

The reservation system illustrated in FIG. 1 is configured by mutually connecting a server 10, establishment terminals 20-1 to 20-m, a billing server 30, and a user terminal 50 via a network 40.

The n-number (here, n represents any integer of 1 or more) of card media C-1 to C-n are distributed by a business operator providing a predetermined product or service, for example, and are configured by an IC (Integrated Circuit) that allows for non-contact communication and a magnetic card, and include functions of recording information (data) and computing. Hereinafter, in a case of being unnecessary to distinguish between the card medium C-1 to C-n individually, these are collectively referred to as simply "card medium C".

The card medium C is associated with proprietary-currency (points) that can be used for payment related to the provision of a product or service from the abovementioned business operator. Here, "associated with proprietary-currency" does not mean that the proprietary-currency is stored directly in the card medium C, but means that the usable amount of the proprietary-currency using the card medium C is managed by the server 10.

In other words, although the card medium C has usage such as using the proprietary-currency for payment related to the provision of a product or service of the abovementioned business operator, etc., the card medium C does not store the proprietary-currency itself, but rather stores only an identifier (card number) for identifying itself uniquely.

Each of the m-number (here, m represents any integer of 1 or more) of establishment terminals 20-1 to 20-m is owned by the m-number of respective business operators.

Here, the business operator is an arbitrary product provider or an arbitrary service provider which may include a taxi dispatch service, for example. However, for the purpose of illustration, the business operator in the present embodiment includes an operator of a prepared food business such as a restaurant and an operator of a business ran in an establishment such as a hair salon. Furthermore, although a plurality of establishment terminals can be distributed at one establishment of the business operator, in the present embodiment, the respective establishment terminals 20-1 to 20-m are distributed one by one to each of the m-number of establishments of the business operators. It should be noted that, in a case of being unnecessary to distinguish between the establishment terminals 20-1 to 20-m individually, these are collectively referred to as "establishment terminal 20".

The establishment terminal 20 is configured as a computer including processing functions as a computer main body, a touch screen as an input device and some buttons, and a display as a display device, a speaker, etc., in a tablet-like housing.

The server 10 is configured by a server and the like managed by another operator other than the abovementioned business operator, and manages the proprietary-currency associated with the card medium C.

For example, in the present embodiment, a predetermined amount of the proprietary-currency is associated in advance (granted in advance) to each card medium C. A holder of the card medium C (for example, a restaurant customer U described later) can use the proprietary-currency associated with the card medium C to pay for the provision of the service from the abovementioned business operator.

However, for payment by this proprietary-currency, there is a condition of the card medium C must be validated. In other words, payment by way of the proprietary-currency cannot be made with a card medium C which is not validated, even if a predetermined amount of the proprietary-currency is associated therewith, for example. Therefore, with the card medium C of the present embodiment, even in a case of the unauthorized use by a third party, the proprietary-currency associated to the card medium C cannot be used so long as in a state not validated.

Therefore, it is possible to securely distribute the card medium C associated with the proprietary-currency to the general public, encourage the spread of the card medium C with which the proprietary-currency is associated, and easily realize advertising campaigns of a wide variety of the business operators using the card medium to which the proprietary-currency is associated.

The server 10 manages such validation of each of the card media C.

Furthermore, for example, the server 10 manages the incrementing/decrementing of the amount of the proprietary-currency which is validated for each of the card media C.

More specifically, the server 10 sets the corresponding relationship with a key currency and the proprietary-currency in a floating manner based on a predetermined condition, with an exchange currency in a predetermined key region (for example, the country issuing the card medium C) as the key currency. As the corresponding relationship between the key currency and the proprietary-currency, it is possible to employ an exchange rate (hereinafter, referred to as "proprietary-currency rate") from the proprietary-currency (point) to the key currency, for example.

As a predetermined condition, in a case of the venue being in Korea, for example, it is possible to set a condition in which there is worth α (α is any value of 0 or more) in comparison to the case of a venue being in a key region (for example, in Japan). In such a case, on the one hand, in a case of the venue being in Japan, the proprietary-currency rate is set as 1 point = 1 Yen, for example. On the other hand, in a case of the venue being in Korea, the proprietary-currency rate is set as 1 point = 1 x α Yen, for example. Furthermore, the predetermined condition can be changed for each of venue. That is to say, for example, in a case of the venue being in US, it is possible to set a condition in which there is worth β (β is any value of 0 or more other than α) in comparison to the case of the venue being in a key region (for example, in Japan). In such a case, on the one hand, in a case of the venue being in Japan, the proprietary-currency rate is set as 1 point = 1 Yen, for example. On the other hand, in a case of the venue being in the USA, the proprietary-currency rate is set as 1 point = 1 x β Yen, for example.

Furthermore, it is possible to set α and β themselves in a floating manner at any timing. For example, it is possible for the server 10 to update the setting of α based on the currency exchange rate between Yen and Won (announced by a certain public institution) at a predetermined timing such as 9:00 AM every morning. Similarly, it is possible for the server 10 to update the setting of β based on the currency exchange rate between Yen and US dollar (announced by a certain public institution) at a predetermined timing such as 9:00 AM every morning.

Alternatively, as a predetermined condition, for example, even if venues are identical, it is possible to set different conditions to each of the business operators issuing the card medium C. In such a case, on the one hand, in a case of Company A being a payment destination, for example, the proprietary-currency rate is set as 1 point = 1 x γ Yen, for example. On the other hand, in a case of Company B being a payment destination, for example, the proprietary-currency rate is set as 1 point = 1 x θ Yen, for example. It should be noted that the value of γ is different from the value of θ and both are any value of 0 or more, respectively.

The server 10 specifies a venue and recognizes the payment amount for a product or a service paid by the card medium C as the amount of the exchange currency at the venue.

Based on the proprietary-currency rate that is set in a floating manner and the currency exchange rate between the exchange currency in the venue thus specified and a key currency (in a case of the venue being in Korea, for example, 1 Won = 0.0834 Yen), the server 10 converts the amount of the exchange currency in the venue thus recognized (for example, in a case of the venue being in Korea, the amount recognized by Won) to the amount of the proprietary-currency for the payment amount for a product or a service paid by the card medium C.

The server 10 executes to manage subtracting the payment amount for a product or a service paid by the card medium C using the proprietary-currency associated to the card medium C.

At this time, in the case of subtracting the amount of the proprietary-currency for the payment by the card medium C, the server 10 requests processing of billing the subtracted amount using the exchange currency of the venue or the key currency (hereinafter, referred to as "billing processing") to the billing server 30.

The billing server 30 executes the billing processing based on the request from the server 10. In other words, the billing server 30 bills the subtracted amount of the proprietary-currency for the payment by the card medium C using the exchange currency at the venue or the key currency.

It should be noted that the targets for which the billing processing by the billing server 30 can be executed may include existing electronic money, a credit card, etc., as well as the card medium C. In other words, the establishment terminal 20 can accept the payment for the provision of service by the abovementioned business operator by way of not only the card medium C, but also any medium such as existing electronic money and a credit card.

The user terminal 50 is a mobile terminal such as a smartphone possessed by a user U using the abovementioned various establishments. The user U can make a reservation for the various establishments using the user terminal 50. This point will be described later.

### Configuration of Server 10

Next, the details of the configuration of the server 10 in such a reservation management system of FIG. 1 will be described.

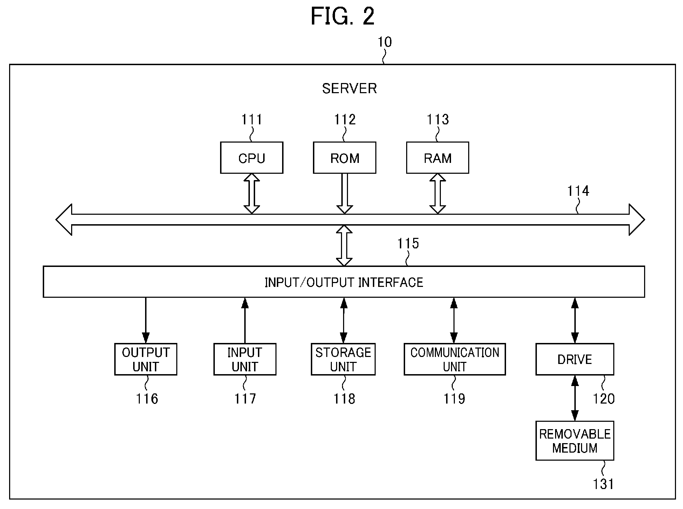

FIG. 2 is a block diagram showing a hardware configuration of the server 10.

The proprietary-currency management device 10 includes a central processing unit (CPU) 111, a read only memory (ROM) 112, a random access memory (RAM) 113, a bus 114, an input/output interface 115, an output unit 116, an input unit 117, a storage unit 118, a communication unit 119, and a drive 120.

The CPU 111 executes various types of processing according to a program recorded in the ROM 112, or a program loaded from the storage unit 118 to the RAM 113.

Data and the like necessary for the CPU 111 to execute the various types of processing are also appropriately stored in the RAM 113.

The CPU 111, the ROM 112, and the RAM 113 are mutually connected through the bus 114. The input/output interface 115 is also connected with the bus 114. The output unit 116, the input unit 117, the storage unit 118, the communication unit 119, and the drive 120 are connected with the input/output interface 115.

The output unit 116 is configured from a display, a speaker, and the like, and outputs images and sounds.

The input unit 117 is configured from a keyboard, various buttons, and the like, and inputs various types of information according to an instruction operation of an operator.

The storage unit 118 is configured from a hard disk, a dynamic random access memory (DRAM), or the like, and stores various data.

The communication unit 119 controls communication performed with another device (the establishment terminal 20, the billing server 30, and the user terminal 50 in the example of FIG. 1) through the network 40 including the Internet.

A removable medium 131 is appropriately mounted to the drive 120, the removable medium 131 being made of a magnetic disk, an optical disk, a magneto-optical disk, a semiconductor memory, or the like. A program read by the drive 120 from the removable medium 131 is installed to the storage unit 118, as needed. Furthermore, the removable medium 131 can also store the various data stored in the storage unit 118, similarly to the storage unit 118.

### Configuration of Establishment Terminal 20

Next, the details of the configuration of the establishment terminal 20 in the reservation system of FIG. 1 will be described.

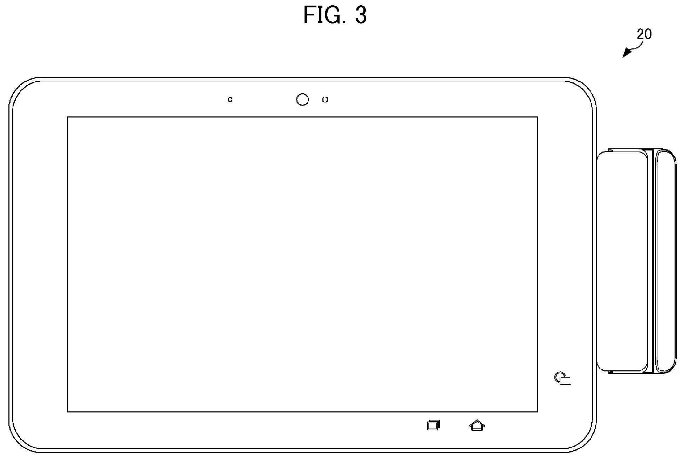

FIG. 3 is a front view illustrating an outline of an outer appearance of the establishment terminal 20.

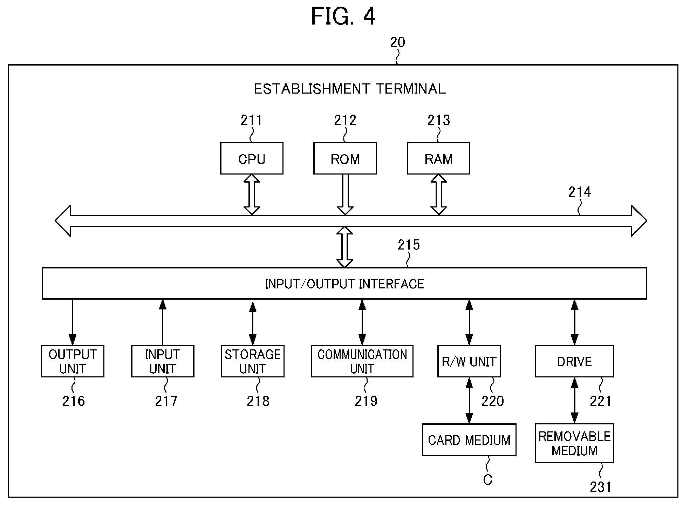

FIG. 4 is a block diagram illustrating a hardware configuration of the establishment terminal 20.

The establishment terminal 20 includes a CPU 211, ROM 212, RAM 213, a bus 214, an input/output interface 215, an output unit 216, an input unit 217, a storage unit 218, a communication unit 219, an R/W unit 220, and a drive 221.

The CPU 211 executes various types of processing according to a program recorded in the ROM 212, or a program loaded from the storage unit 218 to the RAM 213.

The data and the like necessary for the CPU 211 to execute the various types of processing are also appropriately stored in the RAM 213.

The CPU 211, the ROM 212, and the RAM 213 are mutually connected through the bus 214. The input/output interface 215 is also connected with the bus 214. The output unit 216, the input unit 217, the storage unit 218, the communication unit 219, the R/W unit 220, and the drive 221 are connected with the input/output interface 215.

The output unit 216 is configured from a display, a speaker, and the like, and outputs images and sounds.

The input unit 217 is configured from a keyboard, various buttons, and the like, and inputs various types of information according to an instruction operation of an operator.

The storage unit 218 is configured from a hard disk, a dynamic random access memory (DRAM), or the like, and stores various data.

The communication unit 219 controls communication performed with another device (the user terminal 50 in the example of FIG. 1) through the network 40 including the Internet.

The R/W unit 220 functions as a reader/writer of the card medium C, and can read information stored in the card medium C and can write various types of information to the card medium C by performing contact or non-contact communication with the IC incorporated in the card medium C.

A removable medium 231 is mounted as appropriate to the drive 221, the removable medium 231 being made of a magnetic disk, an optical disk, a magneto-optical disk, semiconductor memory, or the like. A program read by the drive 221 from the removable medium 231 is installed to the storage unit 218, as needed. Furthermore, the removable medium 231 can also store the various data stored in the storage unit 218, similarly to the storage unit 218.

In such a reservation system, the establishment terminal 20 can accept and register a reservation from the user terminal 50 with a combination of four or more elements including the time, location, seat, and persons via the server 10. In this case, in addition to the four elements, various elements such as a menu are subject to the combination.

Further, in the reservation system, the reservation is visualized. In other words, a seat layout or the like can be customized on the establishment terminal 20 side, and a user can perform a reservation operation while visually confirming the seat layout by means of the user terminal 50.

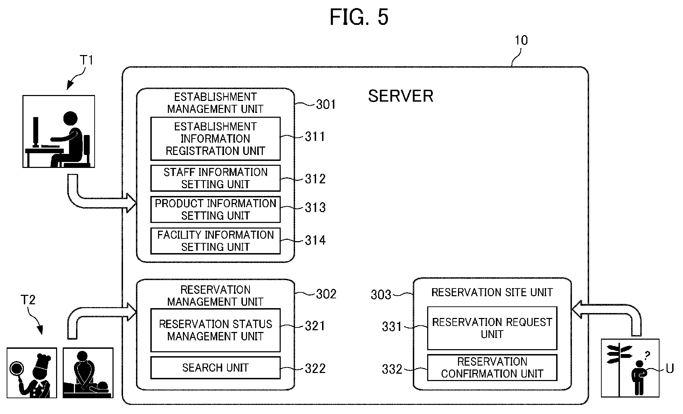

FIG. 5 is a functional block diagram illustrating a functional configuration for executing processing relating to a reservation among the functional configurations of the server 10.

When the execution of processing relating to a reservation is controlled, an establishment management unit 301, a reservation management unit 302, and a reservation site unit 303 function in the CPU 111.

The establishment management unit 301 manages a setting or an association of the four or more elements including the time, location, room or seat, and persons that are necessary as conditions to reserve a predetermined establishment by communicating with the establishment terminal 20 of the predetermined establishment such as a restaurant.

The establishment management unit 301 is provided with an establishment information registration unit 311, a staff information setting unit 312, and a product information setting unit 313.

The establishment information registration unit 311 registers information relating to each establishment (a location) such as information relating to a business calendar of a predetermined establishment (including a business hour of each day) and information relating to an establishment layout of a predetermined establishment, for example.

The staff information setting unit 312 sets working hours for each staff member (a person) working at a predetermined establishment.

A product information setting unit 313 sets information relating to descriptions, prices, etc., of products of a predetermined establishment and sets a provision time of each product.

Here, "product" refers to a broad concept including products in a case of a predetermined establishment selling the products, general targets for services in a case of a predetermined establishment providing services on a regular basis (for example, food (a menu) in a case of a food provision service such as a restaurant), and a cosmetic technique in a case of providing a service of a cosmetic technique (for example, haircut and perm) at a hair salon, for example.

Therefore, for example, as menus are different for lunch and dinner in a restaurant, etc., the time during which each food (a menu) can be provided is a provision time of a product. Here, as the last order is generally fixed around 30 minutes before the business time, for example, the time during which foods can be provided (a provision time of a product) does not necessarily correspond to the business time of a predetermined establishment.

A facility information setting unit 314 sets a usage time for each unit with a facility (a room or a seat) that can be a target for reservation in a predetermined establishment (for example, "a room or a seat" such as a table and a chair) as a unit.

For example, it is possible to make a reservation, even in the same time period, for which the first table (seat) is reserved (this time period is set as a usage time), while the second table (seat) is not reserved (this time period is not set as a usage time).

The facility information setting unit 314 can also set whether to accept sharing a table with another person in addition to the usage time by "room or seat" units.

In this way, working hours of staff members (person) and a usage time of a facility (room or seat) are separately set for each establishment (location).

Then, the establishment management unit 301 associates the time of staff members (person) with the time of a facility (room or seat) for each establishment (location).

In this way, with the time as its core, a location (establishment), a facility (a room or a seat), and staff (a person) are associated, respectively.

As a result, it becomes possible to accept and register a reservation from a user with a combination of time, location, room or seat, and person.

In other words, upon making a reservation for a restaurant or a hair salon, it is possible for the user to confirm the reservation by combining a desired establishment (a location), a desired facility (room or seat), and desired staff member (person) with a desired reservation time period as its core.

More specifically, for example, it becomes possible for the user to make a reservation reserving a table (a room or a seat) at which a night scene can be seen from a window and to eat dishes which a famous chef prepared at a famous restaurant (location), with a desired reservation time period as its core.

Here, regarding "person" and "room or seat", there may exist a "product" that can be handled and "product" that cannot be handled.

For example, in a case of a predetermined establishment being a restaurant, there may be a case in which a skillful chef (person) can prepare a dish (product), but an apprentice (person) cannot. Furthermore, for example, in a case of a predetermined establishment being a hair salon, there may be a case in which a skillful stylist (person) can handle a specific perm technique (product), but an apprentice (person) cannot.

Therefore, the establishment management unit 301 associates a time of a product with a time of staff member (person) and a time of a facility (room or seat) for each establishment (a location).

In this way, with the time as its core, a location (establishment), a facility (room or seat), staff member (person), and a product are associated, respectively.

As a result, it becomes possible to accept and register a reservation from a user with a combination of the time, location, room or seat, person, and product.

In other words, upon making a reservation for a restaurant or a hair salon, it is possible for the user to confirm the reservation by combining a desired establishment (location), a desired facility (room or seat), desired staff member (person), and a desired product with a desired reservation time period as its core.

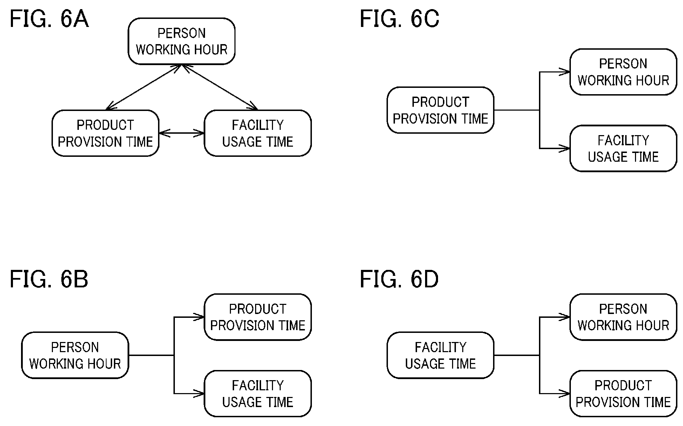

FIG. 6 is a view illustrating an example of associated relationships among a staff member (person), a facility (room or seat), and product for each establishment (location).

FIG. 6(A) illustrates an example of an associated relationship at the time of setting. It is known that the staff member (person), facility (room or seat), and product are associated, respectively.

FIGS. 6(B) to 6(D) illustrate examples of the sequence when a user makes a reservation, respectively.

Since the associated relationship shown in FIG. 6(A) is established, it is possible for a user to freely determine an element to focus on or to prioritize for making a reservation after selecting a desired time period.

FIG. 6(B) illustrates a flow in a case of making a reservation by focusing on (prioritizing) "person". In other words, a user initially designates a desired time period from among working hours of a desired staff member (person). In such a case, the server 10 judges whether the time period, the provision time of a product, and a usage time of a facility overlap, and if they overlaps, can judge as being reservable.

FIG. 6(C) illustrates a flow in a case of making a reservation by focusing on (prioritizing) "product". In other words, a user initially designates a desired time period from among the provision hours of a desired product (in a case of a restaurant, a lunch menu, etc.). In such a case, the server 10 judges whether the time period, the working hours of a person, and the usage time of a facility overlap, and if they overlaps, can judge as being reservable.

FIG. 6(D) illustrates a flow in a case of making a reservation by focusing on (prioritizing) "facility". In other words, a user initially designates a desired time period among provision times of a desired facility (room or seat). In such a case, the server 10 judges whether the time period, the working hours of a person, and a usage time of a facility overlap, and if they overlap, can judge as being reservable.

Here, regarding "room or seat", i.e. "facility" that can be a target for making a reservation, a person in charge of an establishment (in the example of FIG. 5, a person in charge T1) can make a layout (visual drag) of the establishment in accordance with the actual structure of a room or the arrangement of tables in the establishment.

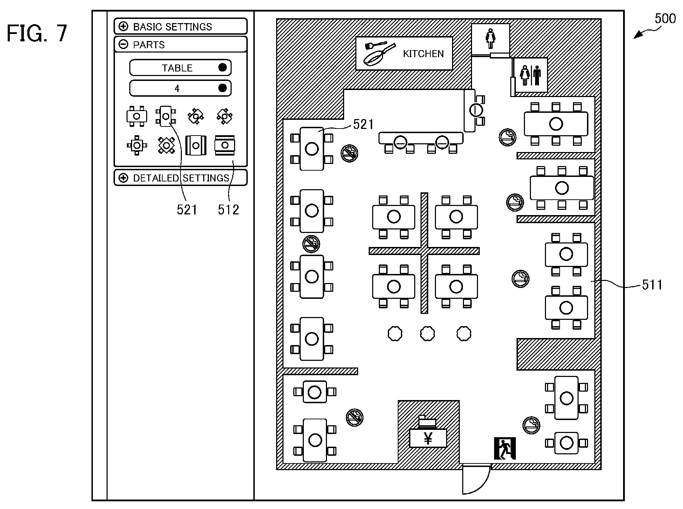

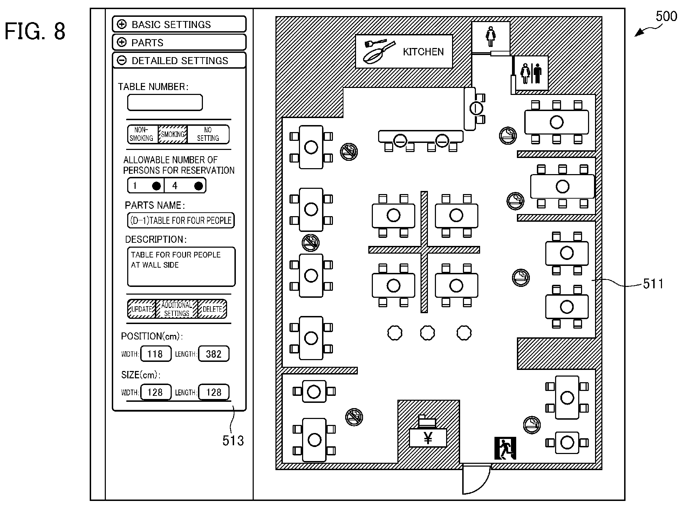

FIGS. 7 and 8 illustrate examples of GUI (Graphical User Interface) screens for making a layout in a case of a restaurant being selected as an establishment.

Although not illustrated, an owner, employees, etc. (in the example of FIG. 5, person in charge T1), of the restaurant log into the server using the establishment terminal 20.

Then, a GUI screen 500 for making a layout (visual drag) of an own establishment as illustrated in FIG. 7 is displayed on the establishment terminal 20.

Then, the owner and the employees of the restaurant can freely set the layout of own establishment in a reservation form by operating this screen.

In other words, an image displayed on a display area 511 shows an appearance of the layout of the establishment and the image is presented to a user at the time of making a reservation. Within this display area 511, it is possible to freely change the shape of the room, the arrangement of tables and chairs, and the like.

More specifically, for the purpose of facilitating an operation, regarding components such as tables, chairs, and the like, components 121 in a default size and form are prepared as an initial setting in the parts screen 512. In other words, the owner, the employees, etc. of the restaurant can choose a desired component 121 and arrange it at a desired position within the display area 511.

Furthermore, the owner, the employees, etc. of the restaurant can freely change the size and the form of the component so as to match the real component by a component unit such as a table and a chair using a details determination screen 513 shown in FIG. 8.

Furthermore, the owner, the employees, etc. of the restaurant can set a condition for receiving a reservation by a component unit using the detail determination screen 513 shown in FIG. 8.

In other words, in the detail determination screen 513 shown in FIG. 8, when a table number of a setting target is inputted, it is possible to set various kinds of settings, with one table specified by the table number as a unit, such as a condition for a non-smoking section, etc. which can be chosen from among "non-smoking, smoking, no setting", a condition of the allowable number of persons for reservation, a condition of a part name (a condition of a type of a table such as a table for four people and a table for six people), explanations for the table to a user (for example, the table is for four people but can be reserved for a single person), and the like. It should be noted that, in a case of setting a table for the first time, a button of "additional settings" is pressed, in a case of updating the settings of a table that has already been set one time, a button of "update" is pressed, and in a case of cancelling the settings of the table, a button of "cancel" is pressed.

Furthermore, regarding the position and the size of the table, it is possible to adjust them by centimeter units so as to match the actual arrangement and dimensions.

In this way, with the reservation system according to the present embodiment, since it is possible to make a reservation by a table (desk) or a chair unit, it is also possible to set an attribute of a desk, a chair, etc., to a component such as a desk, a chair, etc. among the components for which the layout is made.

With reference to FIG. 5 again, the reservation site unit 303 communicates with the user terminal 50, presents a reservation site at which a reservation of an establishment is received to a user U, and manages to receive a reservation from the user U.

In the reservation site unit 303, a reservation request unit 331 and a reservation confirmation unit 332 are provided.

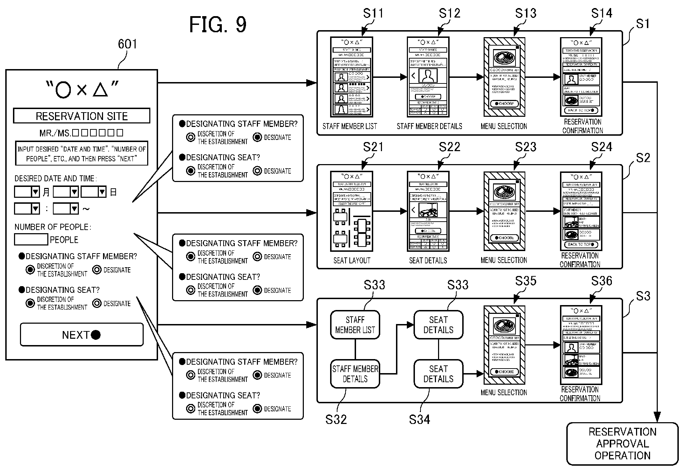

FIG. 9 is a view illustrating a usage example of a reservation registration by the user terminal 50 in the reservation system of FIG. 1, in a case of being applied to a prepared food business.

The user U accesses a reservation site run by the server 10 by operating the user terminal 50.

Then, although not illustrated, the user U operates the user terminal 50 and designates an establishment for which the user U wishes to make a reservation from among a plurality of establishments (locations).

Then, the reservation request unit 331 displays a top page 601 for making a reservation for the establishment designated on the user terminal 50.

The user U operates the user terminal 50 and, on the top page 601, inputs a desired day and time for reservation (in the present example, for the time, only the start of a time period is designated) and the number of people for reservation, and further inputs a staff member (person) designation and a seat (room or seat) designation, if any.

For example, in a case in which the staff member is designated but the seat is not designated (discretion of the establishment), the reservation registration is performed according to the flow of Step S1.

On the other hand, in a case in which the staff member is not designated (discretion of the establishment) but the seat is designated, the reservation registration is performed according to the flow of Step S2.

Furthermore, for example, in a case in which both the staff member and the seat are designated, the reservation registration is performed according to the flow of Step S3.

Here, the respective Steps S11 to S14 in Step S1 are basically the same as the respective Steps S31, S32, S35, and S36 n Step S3.

The respective Steps S21 to S24 in Step S2 are basically similar to the respective S33, S33, S35, and S36. In other words, Step S3 is a combination of Steps S1 and S2.

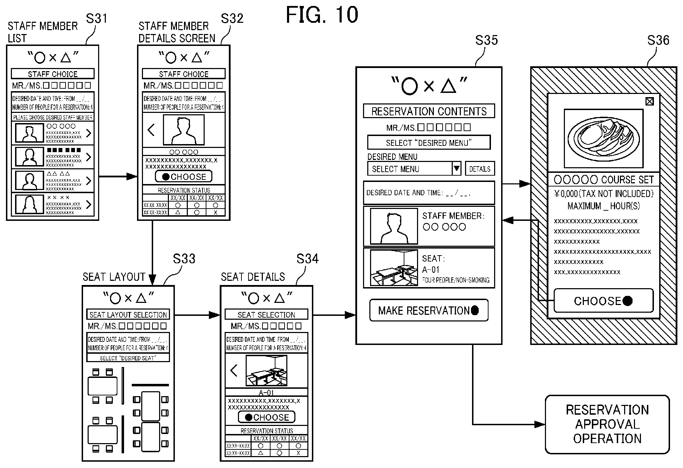

Therefore, only the details of Step S3 will be explained with reference to FIG. 10 below.

FIG. 10 is a usage example of the reservation registration by the user terminal 50 in a case of being applied to a prepared food business in the reservation system of FIG. 1, and a view illustrating the details of a part of the usage example of FIG. 9.

In Step S31, the reservation request unit 331 displays a staff member list page for designating a staff member (person) on the user terminal 50.

The staff member list of the establishment is displayed on the staff member list page. In other words, a variety of types of attributes such as a picture and a name (self-introduction, possible technique, etc.) is displayed for each staff member. Here, the attributes are not limited specifically in terms of the types and the number, and can be freely set by the establishment side.

The user U operates the user terminal 50 and designates a staff member who the user U wishes to designate among a plurality of staff members (persons).

Here, in a case of the establishment being a restaurant, the staff member can be a chef. In this way, by the user designating a desired chef, it is possible for the user to enjoy dishes prepared by this chef. Alternatively, the staff member can be a server. In this way, by the user designating a desired server, it is possible for the user to enjoy the service by the server from starting a meal until leaving the establishment.

In Step S32, the reservation request unit 331 displays a staff member detail page for ultimately designating a staff member (person) which is one person designated on the user terminal 50.

The details of the staff member designated are displayed on the staff detail page. In other words, for the staff member, the detailed contents of a variety of the attributes and a reservation status in addition to the contents displayed on the staff member list page are displayed.

In the reservation status, based on the date and time designated on the top page of FIG. 9, the working hours of the staff members, and the reservations that have already been received, a symbol indicating whether a reservation is possible is displayed for each working hour. It should be noted that, although a single day is divided into three working hour periods and a reservation status for two days is displayed in the present example, the present invention is not limited thereto and the divided number of time periods, and the number of reservation statuses displayed are setting items that can be freely decided by the establishment side.

The symbol "o (circle)" indicates that a reservation is possible. The symbol "Δ (triangle)" indicates that there is some obstacle to reservation and only a partial time period in a time period can be reserved, for example. The symbol "x (cross-mark)" indicates that reservation is not possible.

The user U observes a reservation status and visually confirms that a reservation is made safely for the time period with the symbol "o (circle)", there is some fault in a reservation with the symbol "Δ (triangle)", and the symbol "x (cross-mark)" indicates that reservation is not possible, and then, if the user U wants to designate the staff member, the user U operates the user terminal 50 and presses the "Select" button.

It should be noted that, even when the "Select" button was pressed, the staff member could be reserved, but the reservation time has not been fixed yet in the present example. However, the timing of fixing the reservation time is not specifically limited, and thus this timing may be accepted.

In Step S33, the reservation request unit 331 displays a seat layout page for designating a seat (seat or room) on the user terminal 50.

The layout of the establishment is displayed on the seat layout page. That is to say, the layout set by the establishment which is explained using FIGS. 7 and 8 is displayed.

The user U operates the user terminal 50 and designates a seat which the user wishes to designate among a plurality of tables (seats).

In Step S34, the reservation request unit 331 displays a seat detail page for ultimately designating a seat designated on the user terminal 50.

The details of the seat designated are displayed on the seat detail page. That is to say, for the seat, a picture and the detailed contents of a variety of types of attributes, and the reservation status are displayed. Here, the type and the number of the attributes are not specifically limited, and thus can be freely set at the establishment side.

In the reservation status, based on the date and time designated on the top page of FIG. 9, the reservation status of the staff member designated in Step S32, the time period during which a reservation for the seat is possible, and the reservations that have already been received, a symbol indicating whether a reservation is possible is displayed for each working hour. It should be noted that, although a single day is divided into three working hour periods and a reservation status for two days is displayed in the present example, the present invention is not limited thereto, and the divided number of the time periods and the number of reservation statuses displayed are setting items that can be freely decided by the establishment side.

The symbol "o (circle)" indicates that a reservation is possible. The symbol "Δ (triangle)" indicates that there is some obstacle reservation and only a partial time period in a time period can be reserved, for example. The symbol "x (cross-mark)" indicates that reservation is not possible.

The user U observes a reservation status and visually confirms that a reservation is made reliably for the time period with the symbol "o (circle)", there is some obstacle to reservation with the symbol "Δ (triangle)", and the symbol "x (cross-mark)" indicates that reservation is not possible, and then, if the user U wants to designate the seat, the user U operates the user terminal 50 and presses the "Select" button.

It should be noted that, even when the "Select" button was pressed, the seat could be reserved but the reservation time has not been fixed yet in the present example. However, the timing of fixing the reservation time is not specifically limited, and thus this timing may be accepted.

In Step S35, the reservation request unit 331 displays a reservation confirmation page for confirming a reservation on the user terminal 50.

On the reservation confirmation page, the summary of the staff member (person) and the seat (room or seat) that was designated in Steps S31 to S34 is displayed, and a box for selecting a menu (product) is also displayed.

In such a case, only a menu in which the staff member (person) and the seat (room or seat) can be reserved (such a reservation can be made) becomes selectable.

The user U operates the user terminal 50, and then selects and designates a desired menu among a plurality of menus (products).

Here, if the user U hopes to visually confirm each menu in detail, the user U operates the user terminal 50 and press a "Details" button.

Then, in Step S36, the reservation request unit 331 displays a menu selection page showing the details of a menu which is selected as a candidate on the user terminal 50.

The user U operates the user terminal 50, and if the menu (product) is a desired menu, the user U operates the user terminal 50 and presses a button to select so as to select and designate the menu.

It should be noted that, although Step S35 and Step S36 in FIGS. 9 and 10 are reversed, this is because the menu selection page and the reservation confirmation page can be moved on to each other freely.

In this way, in a case in which reservation contents for the establishment (location) such as the date and time (time) in which the staff member (person), seat (room or seat), and menu (product) can be reserved are fixed, the user operates the user terminal 50, presses a button for making a reservation by operating the user terminal 50, and can request a reservation with the reservation contents.

Then, the processing advances to a reservation approval operation. Specifically, a reservation approval unit 332 sends an e-mail, etc. indicating whether a reservation is possible or not with the reservation contents to the establishment terminal 20. In a case in which a reservation is possible with the reservation contents, the reservation approval unit 332 approves the reservation with the reservation contents. Here, whether a reservation is possible or not may be judged automatically by the reservation approval unit 332 or may be judged based on an explicit instruction from the establishment side. It should be noted that cancellation is also included in the reservation approval.

With reference to FIG. 5 again, the reservation management unit 302 communicates with the establishment terminal 20, manages a reservation status, presents the reservation status to the manager T2 of the establishment, and the like, and receives a search from the manager, and the like.

In the reservation management unit 302, a reservation status management unit 321 and a search unit 322 are provided.

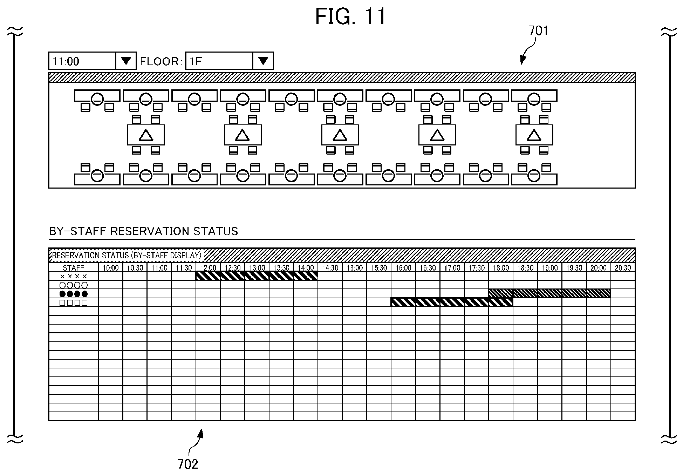

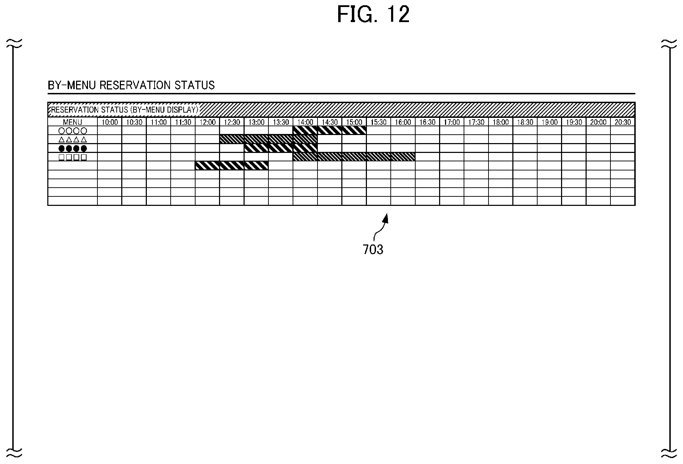

FIGS. 11 and 12 illustrate an example of a reservation status managed by the reservation management unit 321.

The reservation status management unit 321 manages a by-layout reservation status 701 of FIG. 11, a by-staff reservation status of FIG. 11, and a by-menu reservation status 703 of FIG. 12, and controls the establishment terminal 20 to display all of them or only a part of them selectively.

In this way, the manager of the establishment T2 and the like can confirm a reservation status for each element, and thus it is convenient.

For example, in the by-layout reservation status 701, it is possible to confirm a reservation status by component units such as a table. Furthermore, in the by-staff reservation status 702, it is possible to confirm a reservation status in a chronological order by 30-minute units for each staff member (changeable in 10-minute units). In the by-menu reservation status 703, it is possible to confirm a reservation status in chronological order by 30-minute units for each menu (changeable in 10-minute units).

Furthermore, although not illustrated, the manager, etc. T2 of the establishment can confirm a reservation status by designating a condition such as a predetermined date and time, etc. That is to say, the search unit 322 searches a reservation status with a designated condition as a reference, and presents it to the manager, etc. T2 via the establishment terminal 20.

Furthermore, in the above-described embodiment, a server has been exemplarily described as the server 10 to which the present invention is applied. However, the server 10 is not limited to this example.

For example, the present invention can be applied to typical electronic devices. To be specific, the present invention can be applied to a notebook type personal computer, a television receiver, a video camera, a mobile navigation device, a mobile telephone, a portable game device, and the like.

Although not illustrated, the establishment terminal 20 serves as a terminal for ordering on a menu or serves as a terminal for payment (payment through the electronic money of the card medium C or a credit card) after the user leaving the establishment, and thus it is convenient.

Furthermore, the user can make a seat reservation or confirm a reservation status using the own user terminal 50 even after fixing the reservation.

It should be noted that, although the medium with which proprietary-currency is associated is the card medium C in the abovementioned embodiment, the present invention is not limited thereto, and the medium may be any storage medium with which the proprietary-currency is associated. It should also be noted that, as described above, the proprietary-currency itself is not stored in this storage medium, and it is acceptable so long as information from which the storage medium can be identified (in the abovementioned example, a card number) is stored.

In other words, the present invention is applicable by associating proprietary-currency with a storage medium that can specify or identify an individual, more specifically, a magnetic card, an IC card, a mobile data terminal, USB memory, and the like.

The above-described series of processing can be executed by hardware, or by software.

When the series of processing is executed by software, a program that configures the software is installed onto a computer or the like from the network or a recording medium.

The computer may be a computer incorporated in dedicated hardware. Furthermore, the computer may be a computer that can execute various functions, by having various programs installed.

The recording medium that includes such a program is configured from not only the removable medium 131 of FIG. 2 or the removable medium 231 of FIG. 4, which is distributed separately from the device main body, in order to provide the program to the user, but also a recording medium or the like provided to the user in a state of being incorporated in the device main body in advance. The removable medium 131, 231 is configured from, for example, a magnetic disk (including a floppy disk), a Blu-ray disc (registered trademark), an optical disk, or a magneto-optical disk. The optical disk is configured from a compact disk-read only memory (CD-ROM), a digital versatile disk (DVD), or the like. The magneto-optical disk is configured from a mini disk (MD), or the like. Furthermore, the recording medium provided to the user in a state of being incorporated in the device main body in advance is configured from the ROM 112 of FIG. 2 or the ROM 212 of FIG. 4, a hard disk included in the storage unit 118 of FIG. 2 or the storage unit 218 of FIG. 4, or the like in which a program is stored.

It should be noted that, in the present disclosure, the steps that describe the program recorded in the recording medium include not only processing performed consecutively in time following the sequence thereof, but also include processing executed in parallel or in a independent manner, even if the processing is not necessarily performed in chronological order.

Furthermore, in the present disclosure, the terminology of system indicates a general device configured from a plurality of devices, a plurality of means, or the like.

### EXPLANATION OF REFERENCE NUMERALS

- 10: server
- 20: establishment terminal
- 301: establishment management unit
- 302: reservation management unit
- 303: reservation site unit
- 311: establishment information registration unit
- 312: staff member information setting unit
- 313: product information setting unit
- 321: reservation status management unit
- 322: search unit
- 331: reservation request unit
- 332: reservation approval unit

## Claims

1. A reservation system which accepts and registers a reservation with a combination of four or more elements including at least a time, a location, a room or a seat, and a person.

2. The reservation system according to claim 1 which accepts and registers a reservation with a combination further including an element of a menu.
